# EUROPÄISCHE PATENTSCHRIFT

(11) **EP 2 239 072 B1**
(45) Veröffentlichungstag und Bekanntmachung des Hinweises auf die Patenterteilung: **11.07.2012**
(21) Anmeldenummer: 10003753.0
(22) Anmeldetag: 08.04.2010
(51) Int. Cl.: B23B 27/16

(54) **Schneidwerkzeug**
Cutting tool
Outil de coupe

(30) Priorität: 10.04.2009 AT 22809 U
(43) Veröffentlichungstag der Anmeldung: 13.10.2010
(73) Patentinhaber: CERATIZIT Austria Gesellschaft m.b.H., 6600 Reutte /Tirol (AT)
(72) Erfinder: Arzl, Thomas, 6671 Weissenbach (AT); Füller, Stefan, 6600 Lechaschau (DE); Schleinkofer, Uwe, Dr., 6600 Reutte (AT)

(56) Entgegenhaltungen:
- DE-A1- 2 936 869
- DE-A1- 4 209 084
- DE-U1- 8 527 924
- GB-A- 1 088 465
- US-A- 4 697 963

## Beschreibung

Die Erfindung betrifft ein Schneidwerkzeug gemäß Anspruch 1, bestehend aus einem Werkzeuggrundkörper und mindestens einem auswechselbaren Schneideinsatz, der in einer Aufnahme des Werkzeuggrundkörpers angeordnet ist und über eine mit dem Werkzeuggrundkörper verschraubbare Spannpratze, welche mit einem nasenförmigen Vorsprung in eine Ausnehmung des Schneideinsatzes eingreift, am Werkzeuggrundkörper festklemmbar ist.

Die DE 26 20 201-A beschreibt ein derartiges Schneidwerkzeug, bei dem der nasenförmige Vorsprung einer Klemmpratze in eine zylinderförmige Ausnehmung des Schneideinsatzes eingreift. Der nasenförmige Vorsprung greift in einen Bereich ein, welcher einer seitlichen Anlagefläche für den Schneideinsatz in der Aufnahme des Werkzeuggrundkörpers benachbart ist, und ist der zylinderförmigen Ausnehmung in diesem Bereich angepasst. Bei dieser Ausgestaltung eines Schneidwerkzeuges wird der Schneideinsatz in erster Linie gegen die bodenseitige Auflagefläche für den Schneideinsatz geklemmt und ist es nicht gewährleistet, dass der Schneideinsatz auch in ausreichendem Maße gegen die seitlichen Anlageflächen der Aufnahme im Werkzeuggrundkörper gepresst wird.

Darüber hinaus kann es, dadurch, dass die Kontaktzonen von nasenförmigem Vorsprung und Begrenzungsfläche der Schneidplattenausnehmung keine Möglichkeit haben sich gegenseitig zu verschieben, zu einem Hochkippen des Schneideinsatzes von der Auflagefläche im Werkzeuggrundkörper kommen.

In der DE 31 36 549-A1 wird ein Schneidwerkzeug beschrieben, bei welchem die Ausnehmung im Schneideinsatz, in welche die Spannpratze eingreift, durch mindestens zwei, im wesentlichen gleich große konvexe Kurven und diese zu einer länglichen oder sternförmigen Figur verbindende Linien, begrenzt wird. Die Begrenzung des Schneideinsatzes zur Ausnehmung hin verläuft demnach konkav. Der nasenförmige Vorsprung der Spannpratze weist eine konvexe, halbzylindrische oder halbtonnenförmige Form auf, so dass sich in der Kontaktzone zwischen Spannpratze und Schneideinsatz eine punktförmige Berührung ergibt.

Auch bei diesem Schneidwerkzeug liegt der Nachteil darin, dass bei einer toleranzbedingten Verbreiterung der Ausnehmung der nasenförmige Vorsprung der Spannpratze den Schneideinsatz in erster Linie in Richtung Auflagefläche des Schneideinsatzes und zu wenig in Richtung seitliche Anlageflächen im Werkzeuggrundkörper klemmt.

Die EP 1 829 635-A1 beschreibt ein Schneidwerkzeug mit einem Schneideinsatz mit einer kreisförmigen Ausnehmung, mit einer kugel- bzw. kreisförmigen Erhebung in der Mitte, in welche über die gesamte Ausnehmung ein Druckstück eingreift, welches vom nasenförmigen Vorsprung einer Spannpratze beaufschlagt wird. Das Druckstück liegt zusätzlich noch außerhalb der Ausnehmung auf der Spanfläche des Schneideinsatzes auf. Die Kontaktzone des Druckstückes innerhalb der Ausnehmung ist daher nicht eindeutig definiert und es kann wiederum zu einer nicht ausreichenden Klemmung des Schneideinsatzes gegen die seitlichen Anlageflächen des Werkzeuggrundkörpers kommen.

Ein Schneidwerkzeug gemäß dem Oberbegriff des Anspruchs 1 ist aus DE 29 36 869 A1 bekannt.

Aufgabe der Erfindung ist es daher ein Schneidwerkzeug zu schaffen, bei welchem auch bei fertigungstechnisch bedingten Maßabweichungen eine definierte Kontaktzone zwischen Klemmpratze und Ausnehmung im Schneideinsatz vorliegt, gleichzeitig eine ausreichende Klemmkraft für den Schneideinsatz an die seitlichen Anlageflächen des Werkzeuggrundkörpers gewährleistet ist und ein Aufkippen des Schneideinsatzes von der Auflagefläche mit Sicherheit vermieden wird.

Erfindungsgemäß wird dies dadurch erreicht, dass - im Schnitt entlang der Symmetrieebene S der Spannpratze - die Begrenzung des Schneideinsatzes zur Ausnehmung hin, welche mit dem nasenförmigen Vorsprung der Spannpratze in Eingriff steht, eine konvexe Kurvenform aufweist und dass der Kontaktbereich des nasenförmigen Vorsprungs der Spannpratze eine konkave Kurvenform aufweist, welche an die konvexe Kurvenform weitgehend angenähert ist

Durch diese spezielle Ausgestaltung der Kontaktzone zwischen dem nasenförmigen Vorsprung der Spannpratze und der Begrenzung des Schneideinsatzes zur Ausnehmung hin, wird auch bei toleranzbedingten Maßabweichungen und bei geringfügigen Lageveränderungen der Spannpratze stets eine definierte Kontaktzone zwischen Spannpratze und Schneideinsatz erreicht, die ein sicheres Festklemmen des Schneideinsatzes mit einer ausreichenden Klemmkraft zur Auflagefläche sowie zu den seitlichen Anlageflächen des Werkzeuggrundkörpers hin, gewährleistet.

In einer bevorzugten Ausgestaltung des Schneidwerkzeuges weist die Spannpratze in Richtung der Achse A der Schraubenbohrung einen Fortsatz auf, welcher in einer Ausnehmung des Werkzeuggrundkörpers mit einer Rückwand, in Richtung der Symmetrieebene S der Spannpratze beweglich gelagert ist.

Auf diese Weise wird eine Verkippung der Spannpratze in Richtung der Symmetrieebene S, bei gleichzeitig sicherer Abstützung der Spannpratze am Werkzeuggrundkörper ermöglicht, wodurch eine sehr hohe Klemmkraft vor allem zu den seitlichen Anlageflächen des Werkzeuggrundkörpers hin, erreicht wird.

Wenn die dem nasenförmigen Vorsprung gegenüberliegende Endfläche der Spannpratze als ebene Fläche senkrecht zur Symmetrieebene S der Spannpratze ausgeführt ist und diese an einer Begrenzungsfläche der Ausnehmung des Werkzeuggrundkörpers, die ebenfalls als ebene Fläche ausgeführt ist, lediglich in einem weiter vom Schneideinsatz entfernten Endabschnitt anliegt, wird eine seitliche Verdrehung der Spannpratze zum Werkzeuggrundkörper verhindert, ohne dass die Möglichkeit der Verkippung in Richtung der Symmetrieebene S beeinträchtigt wird.

Eine besonders gute Gleitbewegung zwischen dem nasenförmigem Vorsprung der Spannpratze und dem Schneideinsatz wird erreicht, wenn die Begrenzung des Schneideinsatzes zur Ausnehmung hin als konvexer Kreisabschnitt mit einem Radius R₁ und der konkave Kontaktbereich des nasenförmigen Vorsprunges als Kreisabschnitt mit einem Radius R₂ ausgeführt ist, wobei der Radius R₂ größer als der Radius R₁ ist.

Besonders vorteilhaft dabei ist es, wenn die Radien R₁ und R₂ im Bereich von 0,4 bis 5 x dem Durchmesser des Inkreises des Schneideinsatzes liegen und die Verbindungslinie des Mittelpunktes M₁ der konvexen Begrenzung mit dem Radius R₁ mit dem Mittelpunkt M₂ des konkaven Kontaktbereiches mit dem Radius R₂, einen Winkel α im Bereich von 50° bis 70° mit der Spanfläche des Schneideinsatzes einschließt.

Besonders vorteilhaft ist es auch, wenn sich die Kontaktzone zwischen der konvexen Begrenzung des Schneideinsatzes und dem konkaven Kontaktbereich des nasenförmigen Vorsprunges über einen größeren Umfangsbereich des nasenförmigen Vorsprunges erstreckt.

Auf diese Weise wird ein Linienkontakt zwischen der konvexen Begrenzung und dem konkaven Kontaktbereich erreicht und eine punktförmige Kontaktzone, die insbesondere bei Verwendung von druckempfindlichen Werkstoffen wie Keramik für den Schneideinsatz kritisch sein kann, vermieden.

In einer weiteren vorteilhaften Ausgestaltung der Erfindung ist die Ausnehmung im Schneideinsatz eine kreisförmige, konisch zusammenlaufende Einsenkung in der Spanfläche, welche in ein Durchgangsloch übergeht.

Bei einer derartigen Ausgestaltung des Schneideinsatzes ist es zusätzlich von Vorteil, wenn in das Durchgangsloch im Bereich der Auflagefläche des Schneideinsatzes eine geschlitzte Zentrierhülse eingreift. Die Zentrierhülse kann dabei unmittelbar oder über ein Befestigungsmittel für eine Unterlagsplatte für den Schneideinsatz mit dem Werkzeuggrundkörper verbunden sein.

Auf diese Weise kann durch ein Zusammenpressen der geschlitzten Zentrierhülse beim Aufschieben des Schneideinsatzes eine Sicherung des Schneideinsatzes in der Aufnahme im Werkzeuggrundkörper erreicht werden, auch wenn die Klemmpratze noch nicht positioniert ist.

Die erfindungsgemäße Ausführung eines Schneidwerkzeuges ist insbesondere dann von Vorteil, wenn Schneideinsätze verwendet werden, die aus Keramik, kubischem Bornitrid oder polykristallinem Diamant bestehen. Dann ist es auch von Vorteil, wenn zumindest der Kontaktbereich des nasenförmigen Vorsprunges aus Hartmetall besteht.

Im Folgenden wird die Erfindung an Hand von Figuren näher erläutert.

Es zeigen:
- Figur 1: die Explosionsansicht eines erfindungsgemäßen Schneidwerkzeuges
- Figur 2: das Schneidwerkzeug nach Fig. 1 in zusammengebautem Zustand in Schrägansicht
- Figur 3: einen Schnitt durch das Schneidwerkzeug nach Fig. 2 entlang der Symmetrieebene S der Spannpratze
- Figur 4: die Kontaktzone zwischen Spannpratze und Schneideinsatz nach Fig. 3 in vergrößerter Ansicht

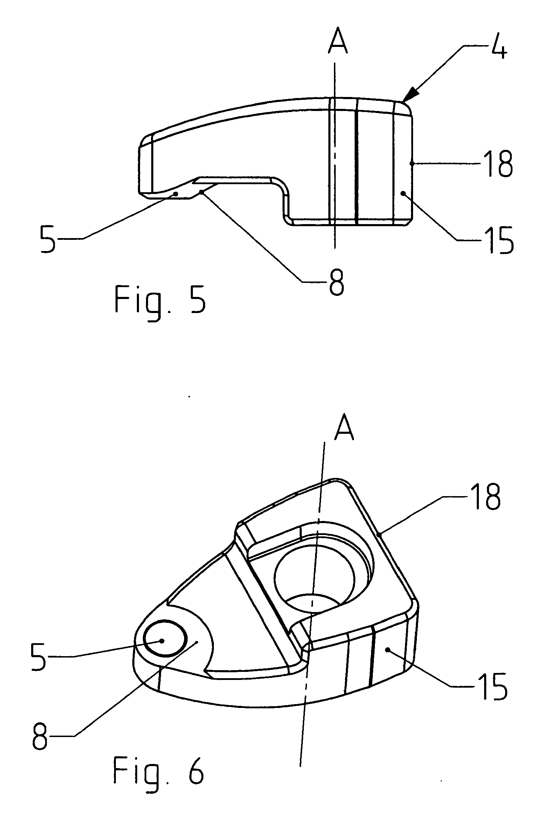

- Figur 5: die Spannpratze des Schneidwerkzeuges nach Fig. 1 und Fig. 2 in Seitenansicht
- Figur 6: die Spannpratze nach Fig. 5 von unten gesehen in Schrägansicht

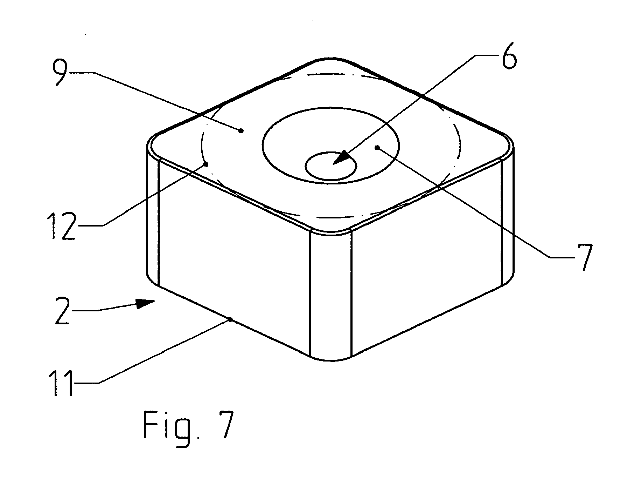

- Figur 7: den Schneideinsatz des Schneidwerkzeuges nach Fig. 1 und Fig. 2

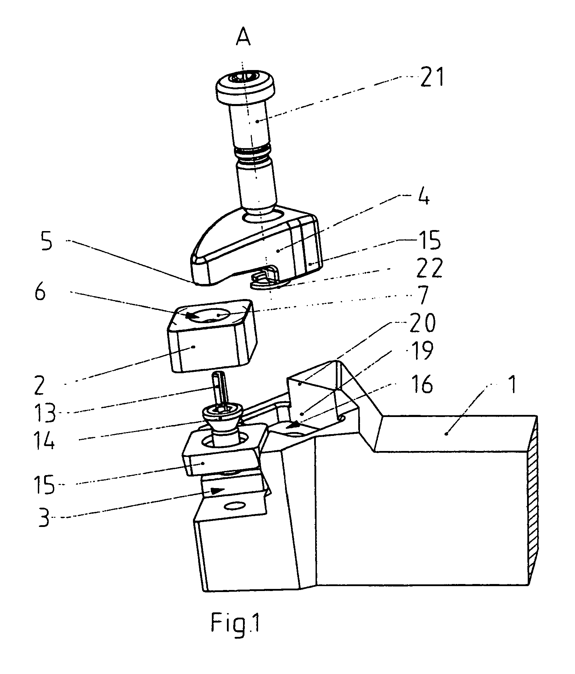

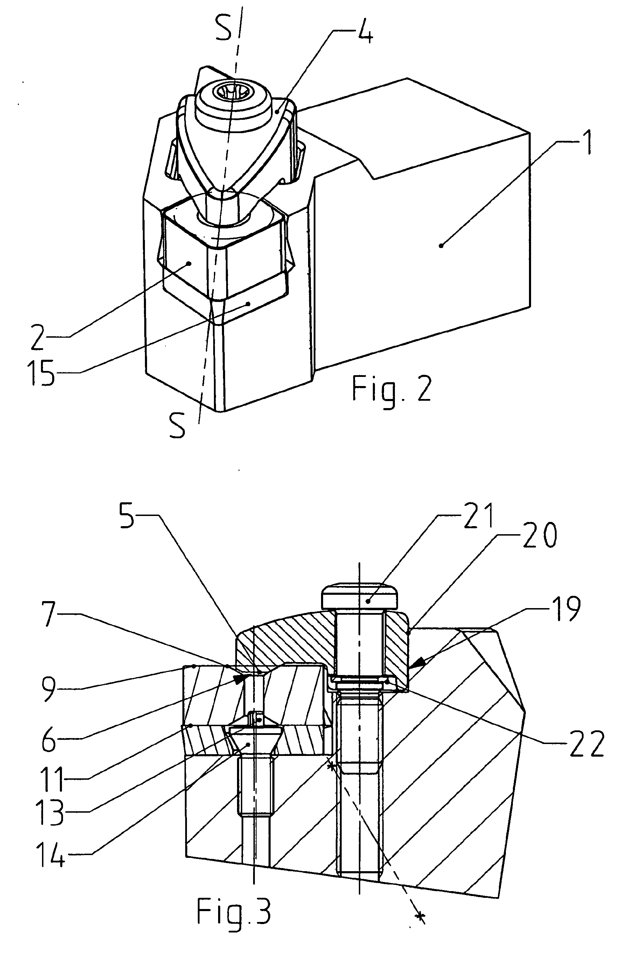

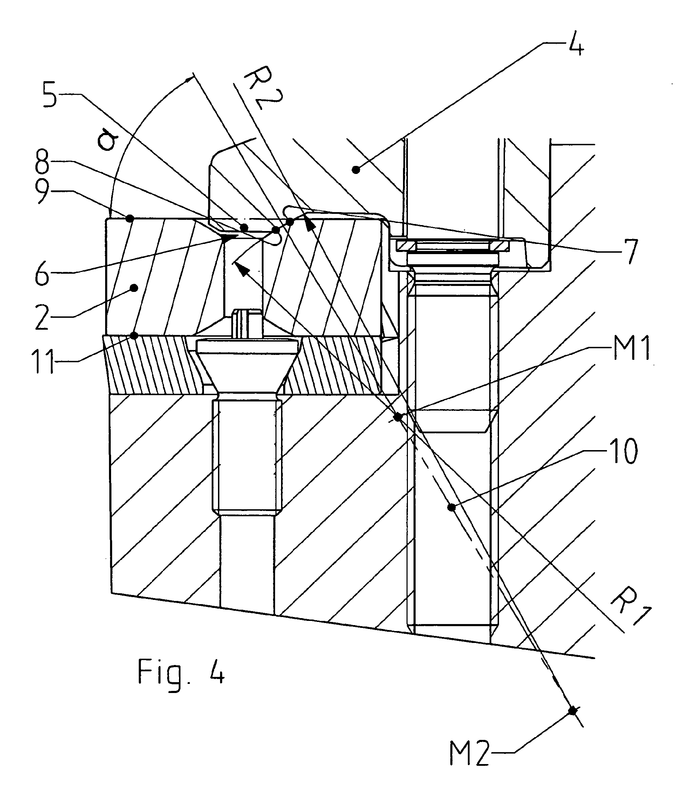

Das in Figur 1 und Figur 2 dargestellte Schneidwerkzeug ist ein Werkzeug zum Drehen mit einem schaftförmigen Werkzeuggrundkörper -1-. Der Kopfteil des Werkzeuggrundkörpers -1- weist eine Aufnahme -3- zur Positionierung eines auswechselbaren Schneideinsatzes -2- auf. Die Aufnahme -3- weist eine Bodenfläche sowie zwei seitliche Anlageflächen auf. Unmittelbar auf der Bodenfläche der Aufnahme -3- ist über eine zentrale Befestigungsschraube -14- eine quadratische Unterlagsplatte -15- befestigt. In einer zentralen Bohrung der Befestigungsschraube -14- ist eine in axialer Richtung geschlitzte Zentrierhülse -13- eingeschoben, welche die Oberseite der Unterlagsplatte -15- überragt. Ein quadratischer Schneideinsatz -2- weist eine Ausnehmung -6-, in Form einer kreisförmigen, konisch zusammenlaufenden Einsenkung mit einer konvexen Begrenzung -7- zur Ausnehmung -6- hin auf, welche sowohl in der Spanfläche -9- als auch in der Auflagefläche -11-eingebracht ist, wodurch der Schneideinsatz doppelseitig verwendbar ist. Die beiden Einsenkungen sind über ein Durchgangsloch miteinander verbunden. Das Durchgangsloch weist einen geringfügig geringeren Durchmesser wie die geschlitzte Zentrierhülse -13- in entspanntem Zustand auf, so dass der Schneideinsatz -2- selbstklemmend auf die Zentrierhülse -13- aufgeschoben werden kann. In die Einsenkung der Spanfläche -9- greift der nasenförmige Vorsprung -5- einer Klemmpratze -4- ein, welcher über eine Befestigungsschraube -21- mit dem Werkzeuggrundkörper -1- verschraubbar ist. Die Spannpratze -4- ist über einen Sicherungsring -22- mit der Befestigungsschraube -21- verbunden. In axialer Richtung des Durchgangsloches für die Befestigungsschraube -21- weist die Spannpratze -4-einen Fortsatz -15- auf, der in einer Ausnehmung -16- des Werkzeuggrundkörpers -1- mit einer Rückwand -19- in Richtung der Symmetrieebene S der Spannpratze -4- beweglich gelagert ist. Die Beweglichkeit der Spannpratze -4- wird dadurch erreicht, dass der Fortsatz -15-mit seiner dem Schneideinsatz -2- benachbarten Seite an der im Vergleich zur Rückwand wesentlich niedrigeren Vorderwand der Ausnehmung -16- vollflächig anliegt, während die vom Schneideinsatz -2- weiter entfernte Seite des Fortsatzes -15- von der Rückwand -19- der Ausnehmung -16- im Fußbereich geringfügig freigestellt ist. Die Spannpratze -4- liegt daher mit ihrer Rückseite -18- an der Rückwand -19- der Ausnehmung -16- so an, dass sie lediglich mit dem oberen Abschnitt ihrer Rückseite -18- mit dem vom Schneideinsatz -2- weiter entfernten Endabschnitt -20- in Kontakt steht. Auf diese Weise wird eine leichte Kippbewegung der Spannpratze -4- in Richtung der Symmetrieebene S der Spannpratze -4- ermöglicht. Die Rückwand -19- der Ausnehmung -16- sowie die Endfläche -18- der Spannpratze -4- sind als ebene Flächen senkrecht zur Symmetrieebene S der Spannpratze -4- ausgeführt, wodurch eine seitliche Verdrehung der Spannpratze -4- verhindert wird. Die genauem Verhältnisse der Kontaktzone zwischen Spannpratze -4- und Schneideinsatz -2- sind am besten in der vergrößerten Darstellung nach Figur 4 zu sehen. Die kreisförmige, konisch zusammenlaufende Einsenkung ist im Bereich der Spanfläche -9- des Schneideinsatzes mit einer Begrenzung -7- des Schneideinsatzes -2- zur Ausnehmung -6- hin in Form eines konvexen Kreisabschnittes mit einem Radius R₁ ausgeführt. Der entsprechende Kontaktbereich -8- des nasenförmigen Vorsprunges -5- der Spannpratze -4- ist als konkaver Kreisabschnitt mit einem Radius R₂ ausgeführt. Der Radius R₁ ist 1,18 mal so groß wie der Durchmesser des Inkreises -12- des Schneideinsatzes -2-, während der Radius R₂ größer ausgeführt ist und 3 mal so groß wie der Durchmesser des Inkreises -12- ist. Der Mittelpunkt M₁ des konvexen Kreisabschnittes mit dem Radius R₁ und der Mittelpunkt M₂ des konkaven Kreisabschnittes mit dem Radius R₂ sind dabei so angeordnet, dass ihre Verbindungslinie -10- einen Winkel α von 60° mit der Spanfläche -9- des Schneideinsatzes -2- einschließt.

## Patentansprüche

1. Schneidwerkzeug, bestehend aus einem Werkzeuggrundkörper (1) und mindestens einem auswechselbaren Schneideinsatz (2) , der in einer Aufnahme (3) des Werkzeuggrundkörpers (1) angeordnet ist und über eine mit dem Werkzeuggrundkörper (1) verschraubbare Spannpratze (4), welche mit einem nasenförmigen Vorsprung (5) in eine Ausnehmung (6) des Schneideinsatzes (2) eingreift, am Werkzeuggrundkörper (1) festklemmbar ist,
**dadurch gekennzeichnet,**
**dass** - im Schnitt entlang der Symmetrieebene S der Spannpratze (4) - die Begrenzung (7) des Schneideinsatzes (2) zur Ausnehmung (6) hin, welche mit dem nasenförmigen Vorsprung (5) der Spannpratze (4) in Eingriff steht, eine konvexe Kurvenform aufweist und dass der Kontaktbereich (8) des nasenförmigen Vorsprungs (5) der Spannpratze (4) eine konkave Kurvenform aufweist, welche an die konvexe Kurvenform weitgehend angenähert ist.

2. Schneidwerkzeug nach Anspruch 1, **dadurch gekennzeichnet, dass** die Spannpratze (4) in Richtung der Achse A der Schraubenbohrung einen Fortsatz (15) aufweist, welcher in einer Ausnehmung (16) des Werkzeuggrundkörpers (1) mit einer Rückwand (19) in Richtung der Symmetrieebene S beweglich gelagert ist.

3. Schneidwerkzeug nach Anspruch 2, **dadurch gekennzeichnet, dass** die dem nasenförmigen Vorsprung (5) gegenüberliegende Endfläche (18) der Spannpratze (4) als ebene Fläche senkrecht zur Symmetrieebene S der Spannpratze (4) ausgeführt ist und dass diese an einer Begrenzungsfläche (19) der Ausnehmung (16) des Werkzeuggrundkörpers (1), die ebenfalls als ebene Fläche ausgeführt ist, lediglich in einem weiter vom Schneideinsatz (2) entfernten Endabschnitt (20) anliegt.

4. Schneidwerkzeug nach einem der Ansprüche 1 bis 3, **dadurch gekennzeichnet, dass** die Begrenzung (7) des Schneideinsatzes (2) als konvexer Kreisabschnitt mit einem Radius R₁ und der konkave Kontaktbereich (8) des nasenförmigen Vorsprunges (5) der Spannpratze (4) als Kreisabschnitt mit einem Radius R₂ ausgeführt ist, wobei R₂ > R₁ ist.

5. Schneidwerkzeug nach Anspruch 4, **dadurch gekennzeichnet, dass** der Radius R₁ sowie der Radius R₂ im Bereich von 0,4 bis 5 x dem Durchmesser des Inkreises (12) des Schneideinsatzes (2) liegt.

6. Schneidwerkzeug nach Anspruch 4 oder 5, **dadurch gekennzeichnet, dass** die Verbindungslinie (10) des Mittelpunktes M₁ der konvexen Begrenzung (7) mit dem Radius R₁ und des Mittelpunktes M₂ des konkaven Kontaktbereiches (8) mit dem Radius R₂ einen Winkel α im Bereich von 50° - 70° mit der Spanfläche (9) des Schneideinsatzes (2) einschließt.

7. Schneidwerkzeug nach einem der Ansprüche 1 bis 6, **dadurch gekennzeichnet, dass** sich die Kontaktzone zwischen der konvexen Begrenzung (7) des Schneideinsatzes (2) und dem konkaven Kontaktbereich (8) des nasenförmigen Vorsprungs (5) über einen größeren Umfangsbereich des nasenförmigen Vorsprunges (5) erstreckt.

8. Schneidwerkzeug nach einem der Ansprüche 1 bis 7, **dadurch gekennzeichnet, dass** die Ausnehmung (6) im Schneideinsatz (2) eine kreisförmige, konisch zusammenlaufende Einsenkung in der Spanfläche (9) ist, welche in ein Durchgangsloch übergeht.

9. Schneidwerkzeug nach Anspruch 8, **dadurch gekennzeichnet, dass** in das Durchgangsloch im Bereich der Auflagefläche (11) des Schneideinsatzes (2) eine geschlitzte Zentrierhülse (13), die unmittelbar oder über ein Befestigungsmittel (14) für eine Unterlagsplatte (15) für den Schneideinsatz (2) mit dem Werkzeuggrundkörper (1) verbunden ist, eingreift.

10. Schneidwerkzeug nach einem der Ansprüche 1 bis 9, **dadurch gekennzeichnet, dass** der Schneideinsatz (2) zumindest teilweise aus Keramik, kubischem Bornitrid oder polykristallinem Diamant besteht und die Spannpratze (4) zumindest im Kontaktbereich (8) des nasenförmigen Vorsprunges (5) mit dem Schneideinsatz (2) aus Hartmetall besteht.

## Claims

1. Cutting tool, consisting of a main tool body (1) and at least one exchangeable cutting insert (2), which is arranged in a receptacle (3) of the main tool body (1) and can be clamped on the main tool body (1) by way of a clamping shoe (4) that can be screwed to the main tool body (1) and engages with a nose-shaped projection (5) in a recess (6) of the cutting insert (2),
**characterized**
**in that** - in section along the plane of symmetry S of the clamping shoe (4) - the delimitation (7) of the cutting insert (2) with respect to the recess (6) that is in engagement with the nose-shaped projection (5) of the clamping shoe (4) has a convex curve form and in that the contact region (8) of the nose-shaped projection (5) of the clamping shoe (4) has a concave curve form that is largely approximated to the convex curve form.

2. Cutting tool according to Claim 1, **characterized in that** the clamping shoe (4) has in the direction of the axis A of the screw bore a continuation (15) that is mounted movably in a recess (16) of the main tool body (1) with a rear wall (19), in the direction of the plane of symmetry S.

3. Cutting tool according to Claim 2, **characterized in that** the end face (18) of the clamping shoe (4) that is opposite from the nose-shaped projection (5) is configured as a planar area perpendicular to the plane of symmetry S of the clamping shoe (4) and **in that** this area bears against a delimiting area (19) of the recess (16) of the main tool body (1), which is likewise configured as a planar area, only in an end portion (20) further away from the cutting insert (2).

4. Cutting tool according to one of Claims 1 to 3, **characterized in that** the delimitation (7) of the cutting insert (2) is configured as a convex segment of a circle with a radius R₁ and the concave contact region (8) of the nose-shaped projection (5) of the clamping shoe (4) is configured as a segment of a circle with a radius R₂, where R₂ > R₁.

5. Cutting tool according to Claim 4, **characterized in that** the radius R₁ and the radius R₂ lie in the range of 0.4 to 5 times the diameter of the inner circle (12) of the cutting insert (2).

6. Cutting tool according to Claim 4 or 5, **characterized in that** the joining line (10) of the centre point M₁ for the convex delimitation (7) with the radius R₁ to the centre point M₂ of the concave contact region (8) with the radius R₂ forms an angle α in the range from 50° - 70° with the rake face (9) of the cutting insert (2).

7. Cutting tool according to one of Claims 1 to 6, **characterized in that** the contact zone between the convex delimitation (7) of the cutting insert (2) and the concave contact region (8) of the nose-shaped projection (5) extends over a greater circumferential region of the nose-shaped projection (5).

8. Cutting tool according to one of Claims 1 to 7, **characterized in that** the recess (6) in the cutting insert (2) is a circular, conically converging indentation in the rake face (9), which goes over into a through-hole.

9. Cutting tool according to Claim 8, **characterized in that** a slit centring sleeve (13), which is connected to the main tool body (1) directly or by way of a fastening means (14) for a bolster plate (15) for the cutting insert (2), engages in the through-hole in the region of the supporting surface (11) of the cutting insert (2).

10. Cutting tool according to one of Claims 1 to 9, **characterized in that** the cutting insert (2) consists at least partially of ceramic, cubic boron nitride or polycrystalline diamond and the clamping shoe (4) consists of hard metal, at least in the contact region (8) of the nose-shaped projection (5) with the cutting insert (2).

## Revendications

1. Outil de coupe, comprenant un corps de base d'outil (1) et au moins un insert de coupe (2) amovible, qui est disposé dans un logement (3) du corps de base d'outil (1) et peut être bloqué sur le corps de base d'outil (1) au moyen d'une griffe de serrage (4) pouvant être vissée avec le corps de base d'outil (1), laquelle griffe s'engage avec une partie saillante (5) en forme d'ergot dans un évidement (6) de l'insert de coupe (2),
**caractérisé**
**en ce que** - dans la coupe le long du plan de symétrie S de la griffe de serrage (4) - la délimitation (7) de l'insert de coupe (2) présente une forme de courbe convexe en direction de l'évidement (6), lequel est en prise avec la saillie (5) en forme d'ergot de la griffe de serrage (4), et en ce que la zone de contact (8) de la saillie (5) en forme d'ergot de la griffe de serrage (4) présente une forme de courbe concave, qui est largement rapprochée de la forme de courbe convexe.

2. Outil de coupe selon la revendication 1, **caractérisé en ce que** la griffe de serrage (4) présente en direction de l'axe A de l'alésage de vis un appendice (15), qui est monté de façon mobile dans un évidement (16) du corps de base d'outil (1) avec une paroi arrière (19) en direction du plan de symétrie S.

3. Outil de coupe selon la revendication 2, **caractérisé en ce que** la surface d'extrémité (18), faisant face à la saillie (5) en forme d'ergot, de la griffe de serrage (4) est conçue sous forme de surface plane perpendiculairement au plan de symétrie S de la griffe de serrage (4) et **en ce que** cette griffe est adjacente à une surface de délimitation (19) de l'évidement (16) du corps de base d'outil (1), qui est réalisée également sous la forme d'une surface plane, uniquement dans un tronçon d'extrémité (20) davantage éloigné de l'insert de coupe (2).

4. Outil de coupe selon l'une des revendications 1 à 3, **caractérisé en ce que** la délimitation (7) de l'insert de coupe (2) est réalisée sous forme de partie circulaire convexe avec un rayon R₁ et la zone de contact (8) concave de la saillie (5) en forme d'ergot de la griffe de serrage (4) sous forme de partie circulaire avec un rayon R₂, R₂ étant > R₁.

5. Outil de coupe selon la revendication 4, **caractérisé en ce que** le rayon R₁ et le rayon R₂ se situent dans la plage de 0,4 à 5 x le diamètre du cercle inscrit (12) de l'insert de coupe (2).

6. Outil de coupe selon la revendication 4 ou 5, **caractérisé en ce que** la ligne de liaison (10) du centre M₁ de la délimitation (7) convexe avec le rayon R₁ et du centre M₂ de la zone de contact (8) concave avec le rayon R₂ forme un angle α compris entre 50° et 70° avec la surface de coupe (9) de l'insert de coupe (2).

7. Outil de coupe selon l'une des revendications 1 à 6, **caractérisé en ce que** la zone de contact entre la délimitation (7) convexe de l'insert de coupe (2) et la zone de contact (8) concave de la saillie (5) en forme d'ergot s'étend sur une zone périphérique assez grande de la saillie (5) en forme d'ergot.

8. Outil de coupe selon l'une des revendications 1 à 7, **caractérisé en ce que** l'évidement (6) dans l'insert de coupe (2) est un enfoncement de forme circulaire et se rétrécissant en forme de cône dans la face de coupe (9), qui fait place à un trou de passage.

9. Outil de coupe selon la revendication 8, **caractérisé en ce qu'**une douille de centrage (13) fendue, qui est reliée au corps de base d'outil (1) directement ou par l'intermédiaire d'un moyen de fixation (14) pour une plaque d'assise (15) pour l'insert de coupe (2), s'engage dans le trou de passage dans la zone de la surface d'appui (11) de l'insert de coupe (2).

10. Outil de coupe selon l'une des revendications 1 à 9, **caractérisé en ce que** l'insert de coupe (2) est au moins en partie à base de céramique, de nitrure de bore cubique et de diamant polycristallin et la griffe de serrage (4) est à base de métal dur au moins dans la zone de contact (8) de la saillie (5) en forme d'ergot avec l'insert de coupe (2).
